# EUROPÄISCHE PATENTSCHRIFT

(11) **EP 2 298 962 B1**
(45) Veröffentlichungstag und Bekanntmachung des Hinweises auf die Patenterteilung: **04.06.2014**
(21) Anmeldenummer: 10169060.0
(22) Anmeldetag: 09.07.2010
(51) Int. Cl.: C23C 24/02, C23C 24/04, C23C 24/06

(54) **Kaltgasspritzen von oxydhaltigen Schutzschichten**
Cold spraying of oxide containing protective coatings
Pulverisation à froid de revêtements contenant des oxydes

(30) Priorität: 17.07.2009 DE 102009033620
(43) Veröffentlichungstag der Anmeldung: 23.03.2011
(73) Patentinhaber: MTU Aero Engines AG, 80995 München (DE)
(72) Erfinder: Jakimov, Andreas, 81245, München (DE); Schneiderbanger, Stefan, 85232, Bergkirchen (DE); Hertter, Manuel, 81247, München (DE)

(56) Entgegenhaltungen:
- EP-A1- 1 806 429
- WO-A1-2008/037237
- DE-B3-102004 059 716
- DE-B3-102005 047 688
- DE-B3-102008 016 969

## Beschreibung

### GEBIET DER ERFINDUNG

Die vorliegende Erfindung betrifft ein Verfahren zur Herstellung einer Beschichtung auf einem Gasturbinenbauteil mittels kinetischen Kaltgasspritzens bzw. ein entsprechend hergestelltes Gasturbinenbauteil, insbesondere Flugturbinenbauteil, nach dem Oberbegriff des Anspruchs 1, wie dies in der Druckschrift DE 10 2045 047 688 B3 offenbart ist.

### STAND DER TECHNIK

Weitere Dokumente WO 2008/037 237 A1, DE 10 2008 016 969 B3 und DE 10 2004 059 716 B3 offenbaren jeweils mehrere Kaltgasspritzanlagen, bei denen in der Mischdüse ein Prozessgas eingeleitet wird, wie auch ein Reaktivgas innerhalb der Düse eingeleitet werden kann.

Bei Gasturbinen treten bei der Verbrennung des Brennstoffs und bei den Strömungsgeschwindigkeiten der durchströmenden Gase hohe Belastungen für die eingesetzten Werkstoffe im Hinblick auf Erosion, Korrosion und dergleichen auf. Entsprechend werden Bauteile in Gasturbinen, sei es im Verdichter- oder im Turbinenbereich mit entsprechenden Schutzschichten, wie Verschleißschutzschichten, Erosionsschutzschichten, Wärmeschutzschichten und Korrosionsschutzschichten versehen. Derartige Schutzschichten müssen ein spezielles Eigenschaftsprofil aufweisen, um den hohen Anforderungen im Einsatz bei einer Gasturbine und insbesondere einer Flugturbine zu genügen. Entsprechend müssen derartige Schutzschichten genaue Spezifikationen beispielsweise hinsichtlich der Werkstoffzusammensetzung erfüllen. Allerdings hängt das Eigenschaftsprofil auch mit der Verarbeitung der entsprechenden Werkstoffe, also beispielsweise mit der Art der Aufbringung zusammen. So müssen beispielsweise bestimmte Schutzschichten, die eine gewisse Härte und Verschleißbeständigkeit aufweisen sollen, einen ausreichenden Oxidgehalt aufweisen, um diese Eigenschaften zu erzielen. Entsprechend werden derartige Schichten mit bestimmten Beschichtungsverfahren aufgebracht, die gewährleisten, dass das Eigenschaftsprofil entsprechend der Anforderungen eingestellte werden kann. Beispielsweise werden CoMoCrSi-Legierungen mit dem Handelsnamen Triballoy, z.B. T 400 oder T 800, durch thermische Spritzverfahren aufgebracht, so dass aufgrund der hohen Temperaturen und der Anwesenheit von Sauerstoff beim Aufbringen in der abgeschiedenen Schicht Oxide gebildet werden, die für die Verschleißbeständigkeit und Härte erforderlich sind.

Allerdings weisen thermische Spritzverfahren, wie beispielsweise Hochgeschwindigkeits-flammspritzen (High velocity oxyde fuel coating) oder Plasmaspritzverfahren Nachteile hinsichtlich ihrer Effektivität und anderer Eigenschaften der abgeschiedenen Schichten, wie beispielsweise der mechanischen Eigenschaften auf. Es besteht deshalb ein Bedarf Alternativen zu entsprechenden Schutzschichten und deren Beschichtungsverfahren bereit zu stellen.

### OFFENBARUNG DER ERFINDUNG

### AUFGABE DER ERFINDUNG

Es ist deshalb Aufgabe der vorliegenden Erfindung Alternativen für Schutzschichten auf Gasturbinenbauteilen und entsprechende Beschichtungsverfahren bereit zu stellen, die die Nachteile des Standes der Technik vermeiden und insbesondere ein ausgewogenes Eigenschaftsprofil der Schichten ermöglichen sowie eine wirtschaftliche und effektive Abscheidung der Schichten erlauben. Insbesondere soll ein entsprechendes Beschichtungsverfahren die Verwirklichung einer Vielzahl von Eigenschaften der abgeschiedenen Schicht in einem ausgewogenen Verhältnis zueinander ermöglichen, wobei die unterschiedlichen Eigenschaften durchaus zueinander gegensätzlich oder einander entgegenstehen sein können. So ist z.B. insbesondere angestrebt harte und verschleißfeste sowie temperaturbeständige Schichten mit gleichzeitig hohen Haftfestigkeiten auf dem Bauteil zu erzeugen, und zwar auf einfache und effektive Weise.

### TECHNISCHE LÖSUNG

Diese Aufgabe wird gelöst durch ein Verfahren mit den Merkmalen des Anspruchs 1 oder 4 sowie ein Gasturbinenbauteil mit den Merkmalen des Anspruchs 12. Weitere vorteilhafte Ausgestaltungen der Erfindung sind Gegenstand der abhängigen Ansprüche.

Die Erfindung geht aus von der Erkenntnis, dass bestimmte Schichtmaterialien für die Bildung von Schutzschichten auf Gasturbinenbauteilen vorteilhaft durch kinetisches Kaltgasspritzen aufgebracht werden können, wenn zur Erzielung einer bestimmten Zusammensetzung gleichzeitig ein reaktives Gas in den Spritzstrahl eingeleitet wird, so dass das reaktive Gas beim Auftreffen der durch das kinetische Kaltgasspritzen auf die zu beschichtende Oberfläche beschleunigten Partikel auf der Oberfläche mit dem reaktiven Gas reagieren können, um so die gewünschte chemische Zusammensetzung zu erzielen. Allerdings wird das reaktive Gas in den Spritzstrahl eingeleitet, nachdem dieser die Spritzdüse verlassen hat. Auf diese Weise lassen sich die Vorteile des kinetischen Kaltgasspritzens bzw. kinetischen Kaltgaskompaktierens für Beschichtungen nutzen, die bisher nur thermisch gespritzt werden konnten, da beim thermischen Spritzen bestimmte Eigenschaften erzielt werden, z.B. Einstellung eines bestimmten Oxidgehalts. Durch das kinetische Kaltgaskompaktieren können bei den Schutzschichten für Gasturbinen die Haftfestigkeit auf dem Grundwerkstoff, insbesondere die Haftzugfestigkeit, größere Schichtdicken und Vorteile hinsichtlich einer Oberflächenverfestigung erzielt werden, wobei gleichzeitig ein höherer Auftragswirkungsgrad und ein geringerer Abdeckaufwand für das zu beschichtende Bauteil, sowie eine einfachere Bauteilvorbereitung als Vorteile vorliegen. Durch die Umwandlung der kinetischen Energie der kaltgasgespritzten Partikel in Deformationsarbeit werden die Partikel beim Auftreffen auf die zu beschichtende Oberfläche erwärmt und es treten lokale Temperaturspitzen an der Partikeloberfläche auf. Dort kann das reaktive Gas mit den gespritzten Partikeln zu den erforderlichen Reaktionsprodukten reagieren, die in der Schichtzusammensetzung erforderlich sind.

Das reaktive Gas kann in den Spritzstrahl an verschiedenen Stellen eingeleitet werden. Vorzugsweise wird das reaktive Gas jedoch unmittelbar am Reaktionsort, also dem Auftreffpunkt der Partikel auf der zu beschichtenden Oberfläche eingespritzt, um dort die maximale Wirkung zu erzielen. Allerdings kann das reaktive Gas auch an jeder anderen Stelle zwischen dem Auslass der Kaltspritzdüse und dem Auftreffpunkt auf der zu beschichtenden Oberfläche eingesprüht werden.

Zusätzlich kann die abgeschiedene Schicht erwärmt werden, um die Reaktion der abgeschiedenen Partikel mit dem reaktiven Gas zu verbessern bzw. zu beschleunigen. Die Erwärmung kann hierbei lokal in einem begrenzten Bereich und/oder großflächig vorgenommen werden. Beispielsweise kann der Spritzstrahl zur Erzeugung der Beschichtung rastermäßig in Art eines Scanners über die zu beschichtende Oberfläche geführt werden, um die gesamte Oberfläche zu beschichten. In gleicher Weise kann eine entsprechende Heizvorrichtung, wie beispielsweise ein Gasbrenner, insbesondere ein Acethylenbrenner, gleichzeitig mit der Kaltspritzvorrichtung oder nachgeführt über die entsprechende Oberfläche bewegt werden. Selbstverständlich ist auch eine Bewegung der Oberfläche des zu beschichtenden Bauteils zur feststehenden Kaltgasspritzvorrichtung bzw. zur Heizvorrichtung möglich.

Zusätzlich oder alternativ zur lokalen Erwärmung kann nach Aufbringen der Schicht oder von Teilen der Schicht auch eine großflächige Erwärmung, insbesondere eine Erwärmung des gesamten Bauteils mit der abgeschiedenen Schicht in einem Ofen oder dergleichen erfolgen.

Zusätzlich kann im Zusammenhang mit der Erwärmung der abgeschiedenen Schicht eine weiter Beaufschlagung bzw. Flutung der Schicht mit dem reaktiven Gas erfolgen. So kann beispielsweise zusätzlich zu der Heizeinrichtung, die nachfolgend dem Kaltgasspritzen eine entsprechende Erwärmung der abgeschiedenen Beschichtung bewirkt, eine Gaslanze mitgeführt werden, die das reaktive Gas auf den erwärmten Bereich der Beschichtung richtet, um ausreichend reaktives Gas für eine Reaktion mit der abgeschiedenen Schicht zur Verfügung zu stellen.

Entsprechend kann nach einem weiteren Aspekt der vorliegenden Erfindung, für den selbstständig und unabhängig Schutz begehrt wird, eine Kombination des kinetischen Kaltgasspritzens mit einer nachfolgenden lokalen und/oder großflächigen Erwärmung der abgeschiedenen Schicht unter gleichzeitiger Beaufschlagung bzw. Flutung der abgeschiedenen Schicht mit einem reaktiven Gas vorgenommen werden.

Neben einer gleichzeitigen Beaufschlagung mit reaktivem Gas während der lokalen und/oder großflächigen Erwärmung kann auch die Flutung bzw. Beaufschlagung der abgeschiedenen Schicht mit dem reaktiven Gas kurz nach einer lokalen und/oder großflächigen Erwärmung erfolgen.

Die Beschichtung kann lagenweise auf der Oberfläche aufgebracht werden, so dass eine große Schichtdicke erzielbar ist. Gleichzeitig wird sichergestellt, dass die Reaktion mit dem reaktiven Gas über die gesamte Schichtdicke in gleichmäßiger Weise erfolgen kann.

Darüber hinaus kann die Beschichtung rasterfömig durch Abscannen auf der zu beschichtenden Oberfläche, beispielsweise durch eine Relativbewegung von Kaltgasspritzvorrichtung und der zu beschichtenden Oberfläche, aufgebracht werden. In gleicher Weise können entsprechend Heizvorrichtungen und/oder Gaslanzen zur lokalen Erwärmung und zur Versorgung mit reaktivem Gas bewegt werden.

Das reaktive Gas kann insbesondere Sauerstoff sein oder Sauerstoff umfassen, um entsprechende Oxide in der abgeschiedenen Schicht auszubilden. Entsprechende oxidhaltige Schutzschichten dienen bei Gasturbinen insbesondere dem Verschleißschutz und Korrosionsschutz bzw. Erosionsschutz. Entsprechend können die Partikel bzw. das Partikelpulver, die durch kinetisches Kaltgasspritzen bzw. kinetisches Kaltgaskompaktieren auf der Oberfläche des zu beschichtenden Bauteils abgeschieden werden, aus Werkstoffen gebildet sein und/oder zumindest Bestandteile entsprechender Werkstoffe umfassen, die oxidhaltige Schichten, Hartstoff-, Verschleißschutz-, Korrosionsschutz-, Oxidationsschutz-, Wärmeschutz- und/oder Erosionsschutzschichten bilden. Insbesondere können Werkstoffe abgeschieden werden oder entsprechende Schichten erzeugt werden, die auch durch Hochgeschwindigkeitsflammspritzen und/oder Plasmaspritzen, also allgemein thermische Spritzverfahren abgeschieden werden könnten, da sie bei den dort verwendeten hohen Prozesstemperaturen in Anwesenheit von Sauerstoff automatisch die entsprechenden Oxide ausbilden.

Für Gasturbinenbauteile, insbesondere Flugturbinenbauteile, kommen Schichten aus Ni-Basislegierungen, Co-Basislegierungen, Ti-Basislegierungen, CrNi-Legierungen, WC-Werkstoffen, Stähle, CoMoCrSi-Legierungen und/oder MCrA1Y-Legierungen mit M gleich Ni und/oder Co in Betracht.

Durch das kinetische Kaltgaskompaktieren können insbesondere Schichten großer Schichtdicke im Bereich von 20 µm bis 20 mm , insbesondere von 0,1 bis 10 mm abgeschieden werden.

Die Erfindung betrifft insbesondere auch entsprechende Gasturbinenbauteile, insbesondere Flugturbinenbauteile mit erfindungsgemäß abgeschiedenen Schichten, die sich dadurch auszeichnen können, dass das Gefüge durch die verformten Körner der auftreffenden Partikel sowie entsprechende Oxide gekennzeichnet ist.

### KURZBESCHREIBUNG DER FIGUREN

Weitere Vorteile, Kennzeichen und Merkmale der vorliegenden Erfindung werden bei der nachfolgenden detaillierten Beschreibung eines Ausführungsbeispiels anhand der beigefügten Figuren deutlich. Die Figuren zeigen hierbei in rein schematischer Weise in
- Figur 1: eine Prinzipskizze einer Vorrichtung zur Durchführung des erfindungsgemäßen Verfahrens; und in
- Figur 2: eine teilweise Schnittansicht durch ein gemäß der Erfindung beschichtetes Bau- teil.

### AUSFÜHRUNGSBEISPIEL

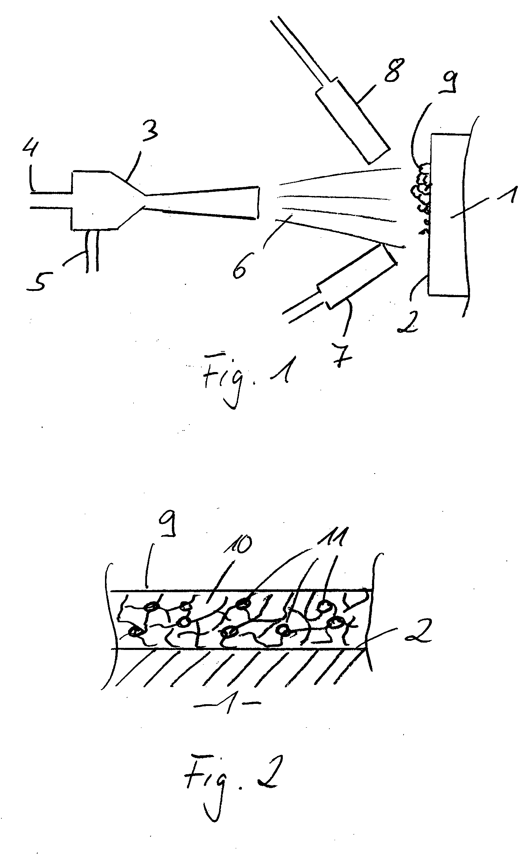

Die Figur 1 zeigt eine schematische Prinzipskizze einer Vorrichtung, mittels der das erfindungsgemäße, kinetische Kaltgasspritzverfahren durchgeführt werden kann.

Das zu beschichtende Bauteil 1 mit der zu beschichtenden Oberfläche 2 wird gegenüberliegend einer sogenannten Laval-Düse 3 bzw. einer entsprechend ausgestatteten Kaltgasspritzvorrichtung angeordnet, so dass der Spritzstrahl 6 mit den Pulverpartikeln auf die zu beschichtende Oberfläche 2 auftreffen kann. Zur Erzeugung des Spritzstrahls 6 wird in der Kaltgasspritzeinrichtung 3 ein Prozessgas, beispielsweise über die Zuführleitung 4 der Kaltgasspritzvorrichtung 3 zugeführt und mit entsprechenden Pulverpartikeln, die über die Zuführleitung 5 in die Kaltgasspritzvorrichtung 3 eingeleitet werden, vermischt und mit hohem Druck durch die Laval-Düse 3 geleitet, so dass sich sehr hohe Austrittsgeschwindigkeiten für den Spritzstrahl 6 ergeben. Die Austrittsgeschwindigkeit kann bis in den Geschwindigkeitsbereich der Schallgeschwindigkeit reichen. Die entsprechend auf die zu beschichtende Oberfläche 2 beschleunigten Pulverpartikel werden beim Auftreffen auf der Oberfläche 2 aufgrund ihrer kinetischen Energie verformt, wobei es durch die Verformung zu entsprechender Erwärmung mit Temperaturspitzen an den verformten Partikeln kommt.

Dies wird beim erfindungsgemäßen Verfahren genutzt, um mittels der Flutung der Oberfläche mit einem reaktiven Gas, wie beispielsweise Sauerstoff, eine Reaktion der Partikel mit dem reaktiven Gas zu bewirken. Hierzu ist eine Gaslanze 7 vorgesehen, mittels der das reaktive Gas, wie beispielsweise Sauerstoff, in den Spritzstrahl 6 und/oder auf den Auftreffort der Partikel auf der zu beschichtenden Oberfläche 2 gerichtet werden kann.

Darüber hinaus kann eine zusätzliche Heizeinrichtung 8, z.B. in Form eines Gasbrenners vorgesehen sein, welcher eine lokale Erwärmung der zu beschichtenden Oberfläche 2 ermöglicht. Dadurch kann die Reaktion der beschichteten Partikel mit dem reaktiven Gas, also beispielsweise die Oxidbildung, unterstützt werden. Die lokale Erwärmung durch die Heizeinrichtung 8 kann zusätzlich unmittelbar beim Auftreffen der Partikel auf die zu beschichtende Oberfläche vorgesehen sein oder als nachfolgende Erwärmung der abgeschiedenen Schicht 9.

Darüber hinaus kann gleichzeitig mit der nachfolgenden lokalen Erwärmung, eine weitere Flutung der bereits beschichteten Oberfläche 2 mit dem reaktiven Gas erfolgen. In diesem Fall wird eine ausreichende Nachlieferung des reaktiven Gases, also des chemischen Elementes, welches mit den Schichtpartikeln reagieren soll, gewährleistet. Andererseits kann auf eine zusätzliche Flutung mit reaktivem Gas bei der lokalen Erwärmung verzichtet werden, wenn bereits durch die Flutung der Oberfläche mit dem reaktiven Gas während des kinetischen Kaltgasspritzens ausreichend Gas vorliegt.

Zusätzlich oder alternativ zu der lokalen Erwärmung, beispielsweise über einem Gasbrenner 8, wie sie in Figur 1 schematisch dargestellt ist, kann auch eine großflächige Wärmebehandlung, beispielsweise durch Tempern des gesamten Bauteils 1 nach der Beschichtung durchgeführt werden, bei welcher ebenfalls unverbrauchtes, in der Schicht vorliegendes reaktives Gas mit dem Beschichtungswerkstoff reagieren kann.

Das zu beschichtende Bauteil 1 kann insbesondere ein Bauteil einer Gasturbine, insbesondere einer Flugturbine sein, wobei unter Turbine die gesamte Vorrichtung gemeint ist und nicht nur die auch als Turbinenteil bezeichneten Bereiche einer entsprechenden Vorrichtung. Insbesondere können mit dem vorliegenden Verfahren zur Beschichtung mittels Kaltgaskompaktieren unter Zufuhr eines reaktiven Gases, wie insbesondere Sauerstoff, oxidhaltige Schichten abgeschieden werden, die bisher üblicherweise durch thermische Spritzverfahren abgeschieden worden sind, um während des thermischen Spritzens die erforderlichen Oxide zu bilden. Entsprechend können Schichten abgeschieden werden, die bisher üblicherweise mit Hochgeschwindigkeitsflammspritzen oder Plasmaspritzen erzeugt worden sind, wie beispielsweise Verschleißschutzschichten, Erosionsschutzschichten, Hartstoffschichten und dergleichen. Entsprechend können Pulverpartikel eingesetzt werden, die zumindest Bestandteile derartiger Schichten aufweisen. Es kommen somit insbesondere Pulverpartikel aus Ni-Basislegierungen, Co-Basislegierungen, Ti-Basislegierungen, CrNi-Legierungen, WC-Werkstoffen, Stählen, CoMoCrSi-Legierungen und/oder MCrA1Y-Legierungen mit M gleich Ni und/oder Co in Frage. So können Legierungen wie Inconel 718, Inconel 625, Hastaloy C4, Hastalloy B, Hastalloy C 276, Triballoy T 800, Triballoy T 400 und dergleichen, die üblicherweise durch Hochgeschwindigkeitsflammspritzen oder Plasmaspritzen auf Bauteilen abgeschieden werden, durch kinetisches Kaltgaskompaktieren abgeschieden oder erzeugt werden, wobei der entsprechende Oxidgehalt durch eine angepasste Sauerstoffflutung während des Abscheidens und/oder einer nachfolgenden Behandlung eingestellt werden kann.

Die Figur 2 zeigt eine teilweise Schnittansicht durch ein beschichtetes Bauteil 1, bei dem auf der zu beschichtenden Oberfläche 2, die fertig abgeschiedene Beschichtung 9 zu erkennen ist. Hier ist schematisch neben den verformten Partikeln 10, die aufgrund der Verformung einen festen Verbund und eine fest anhaftende Schicht 9 bilden, gezeigt, dass durch die Anwesenheit des reaktiven Gases im Spritzstrahl bzw. beim Auftreffen der Partikel auf der zu beschichtenden Oberfläche 2 entsprechende Oxide 11 gebildet worden sind.

Obwohl die vorliegende Erfindung anhand des dargestellten Ausführungsbeispiels detailliert beschrieben worden ist, ist für den Fachmann selbstverständlich, dass die Erfindung nicht auf diese Ausführungsform beschränkt ist, sondern dass vielmehr Abwandlungen in Form von Weglassen einzelner Merkmale oder einer andersartigen Kombination der vorgestellten Merkmale möglich sind, ohne den Schutzbereich der beigefügten Ansprüche zu verlassen. Insbesondere umfasst die vorliegende Erfindung sämtliche Kombinationen aller vorgestellten Merkmale.

## Patentansprüche

1. Verfahren zur Herstellung einer Beschichtung auf einem Gasturbinenbauteil, bei welchem Partikel zumindest von Teilen des als Beschichtung aufzubringenden Werkstoffs mittels kinetischem Kaltgasspritzen in einem Spritzstrahl auf die Oberfläche (2) des zu beschichtenden Bauteils (1) beschleunigt werden, wobei
in den Spritzstrahl (6) ein reaktives Gas eingeleitet wird, so dass das reaktive Gas beim Auftreffen der Partikel auf der zu beschichtenden Oberfläche (2) mit den Partikeln des Beschichtungswerkstoffs zumindest teilweise reagiert,
**dadurch gekennzeichnet, dass**
das reaktive Gas in den Spritzstrahl (6) eingeleitet wird, nachdem dieser die Spritzdüse verlassen hat

2. Verfahren nach Anspruch 1,
**dadurch gekennzeichnet, dass**
das reaktive Gas auf den Auftreffpunkt der Partikel auf der zu beschichtenden Oberfläche (2) gerichtet wird.

3. Verfahren nach einem der vorhergehenden Ansprüche,
**dadurch gekennzeichnet, dass**
die abgeschiedene Schicht (9) lokal und/oder großflächig erwärmt und/oder mit dem reaktiven Gas beaufschlagt wird.

4. Verfahren nach einem der Ansprüche 3,
**dadurch gekennzeichnet, dass**
die lokale Erwärmung durch einen Gasbrenner (8), insbesondere Acethylenbrenner erfolgt.

5. Verfahren nach einem der Ansprüche 3 bis 4,
**dadurch gekennzeichnet, dass**
die Beaufschlagung mit reaktivem Gas gleichzeitig und/oder nach einer lokalen Erwärmung erfolgt.

6. Verfahren nach einem der vorhergehenden Ansprüche,
**dadurch gekennzeichnet, dass**
die Beschichtung lagenweise und/oder durch Scannen der Oberfläche aufgebracht wird.

7. Verfahren nach einem der vorhergehenden Ansprüche,
dadurch gekennzeichet, dass
das reaktive Gas zur Bildung von Oxiden Sauerstoff ist oder umfasst.

8. Verfahren nach einem der vorhergehenden Ansprüche,
**dadurch gekennzeichnet, dass**
die Partikel zumindest Bestandteile umfassen und/oder aus Werkstoffen gebildet sind, die oxidhaltige Schichten, Hartstoff-, Verschleißschutz-, Korrosionsschutz-, Oxidationsschutz-, Wärmeschutz- und/oder Erosionsschutzschichten bilden, welche insbesondere durch Hochgeschwindigkeitsflammspritzen und/oder Plasmaspritzen abscheidbar sind, vorzugsweise Schichten aus Ni-Basislegierungen, Co-Basislegierungen, Ti-Basislegierungen, CrNi-Legierungen, NiAl-Legterungen, WC-Werkstoffe, Stähle, CoMoCrSi-Legierungen und/oder MCrAlY-Schichten mit M gleich Ni und/oder Co,

9. Verfahren nach einem der vorhergehenden Ansprüche,
**dadurch gekennzeichnet, dass**
die Schicht (9) mit einer Dicke von 20 µm bis 20 mm, insbesondere 0,1 mm bis 10 mm abgeschieden wird.

## Claims

1. Method for the production of a coating on a gas turbine component, in which particles at least from parts of the material to be applied as a coating are accelerated by means of kinetic cold gas spraying in a spray jet onto the surface (2) of the component (1) to be coated,
a reactive gas is introduced into the spray jet (6), such that the reactive gas at least partially reacts with the particles of the coating material when the particles strike the surface (2) that is to be coated,
**characterised in that**,
the reactive gas is introduced into the spray jet (6) after this has left the spraying nozzle.

2. Method according to claim 1,
**characterised in that**,
the reactive gas is focused on the striking point of the particles on the surface (2) that is to be coated.

3. Method according to one of the preceding claims,
**characterised in that**,
the deposited layer (9) is heated locally and/or extensively and/or is charged with the reactive gas.

4. Method according to claim 3,
**characterised in that**,
the local heating takes place by means of a gas burner (8), in particular an acetylene burner.

5. Method according to one of claims 3 to 4,
**characterised in that**,
the charging with reactive gas takes place at the same time as and/or after a local heating.

6. Method according to one of the preceding claims,
**characterised in that**,
the coating is applied in layers and/or by scanning the surface.

7. Method according to one of the preceding claims,
**characterised in that**,
the reactive gas is or comprises oxygen for the formation of oxides.

8. Method according to one of the preceding claims,
**characterised in that**,
the particles comprise at least components of and/or are formed of materials that form oxide-containing layers, hard material layers, abrasion-protecting layers, corrosion-protecting layers, oxidation-protecting layers, heat-protecting layers and/or erosion-protecting layers, which can in particular be deposited by high-speed flame spraying and/or plasma spraying, preferably layers made from Ni-based alloys, Co-based alloys, Ti-based alloys, CrNi alloys, NiAl alloys, WC (tungsten carbide) materials, steels, CoMoCrSi alloys and/or MCrAlY layers where M is equal to Ni and/or Co.

9. Method according to one of the preceding claims,
**characterised in that**,
the layer (9) is deposited with a thickness from 20µm to 20mm, in particular from 0.1mm to 10mm.

## Revendications

1. Procédé de production d'un revêtement sur un élément de turbine à gaz, dans lequel des particules au moins de parties de matériau à appliquer comme revêtement sont accélérées au moyen d'injections de gaz froid cinétiques dans un jet de pulvérisation sur la surface (2) de la pièce à revêtir (1), dans lequel
dans le jet de pulvérisation (6), un gaz réactif est introduit, de sorte que le gaz réactif réagit au moins partiellement lorsqu'il rencontre les particules sur la surface à revêtir (2) avec les particules du matériau de revêtement,
**caractérisé en ce que**
le gaz réactif est introduit dans le jet de pulvérisation (6) après qu'il a quitté la buse de pulvérisation.

2. Procédé selon la revendication 1,
**caractérisé en ce que**
le gaz réactif est dirigé sur le point de rencontre des particules sur la surface à revêtir (2).

3. Procédé selon l'une des revendications précédentes,
**caractérisé en ce que**
la couche déposée (9) est chauffée localement et/ou sur toute la surface et/ou est soumise à un apport de gaz réactif.

4. Procédé selon la revendication 3,
**caractérisé en ce que** le chauffage local est réalisé par un brûleur à gaz (8), en particulier un brûleur à acétylène.

5. Procédé selon l'une des revendications 3 à 4,
**caractérisé en ce que**
l'apport de gaz réactif s'effectue en même temps et/ou après un chauffage local.

6. Procédé selon l'une des revendications précédentes,
**caractérisé en ce que**
le revêtement est appliqué par couche et/ou par balayage de la surface.

7. Procédé selon l'une des revendications précédentes,
**caractérisé en ce que**
le gaz réactif est ou comprend de l'oxygène pour la formation d'oxydes.

8. Procédé selon l'une des revendications précédentes,
**caractérisé en ce que**
les particules comprennent au moins des composants et/ou sont formées de matériaux qui forment les couches contenant un oxyde, les couches d'urée, de protection contre l'usure, de protection contre la corrosion, de protection contre l'oxydation, de protection contre la chaleur et/ou de protection contre l'érosion qui peuvent être déposées en particulier par pulvérisation à la flamme à vitesse élevée et/ou pulvérisation de plasma, de préférence, des couches d'alliage à base de Ni, d'alliages à base de Co, d'alliages à base de Ti, d'alliages de CrNi, d'alliages de NiAl, de matériaux WC, d'aciers, d'alliages de CoMoCrSi et/ou des couches de MCrAlY où M est le Ni et/ou le Co.

9. Procédé selon l'une des revendications précédentes,
**caractérisé en ce que**
la couche (9) est déposée en une épaisseur de 20 µm à 20 mm, en particulier de 0,1 mm à 10 mm.
